Europäisches Patentamt

European Patent Office

Office européen des brevets

(11) Publication number: **0 050 672**
**B1**

(12) **EUROPEAN PATENT SPECIFICATION**

(45) Date of publication of patent specification: **23.10.85**

(51) Int. Cl.⁴: **C 10 L 1/32**

(21) Application number: **80106374.4**

(22) Date of filing: **20.10.80**

(54) **Separation method for discrete minerals bonded together mechanically in particulate form and method for the production of fuel using this separation method.**

(43) Date of publication of application:
**05.05.82 Bulletin 82/18**

(45) Publication of the grant of the patent:
**23.10.85 Bulletin 85/43**

(84) Designated Contracting States:
**DE FR GB IT NL SE**

(56) References cited:
**CA-A- 996 485**
**FR-A-1 010 117**
**US-A-3 941 552**
**US-A-4 054 506**
**US-A-4 151 067**

(73) Proprietor: **Convair Investments Limited**
**E.D. Sassoon Bldg. Parliament Street P.O. Box N3045**
**Nassau Bahamas (US)**

(72) Inventor: **Cottell, Eric C.**
**Private Road**
**Bayville, NY 11709 (US)**

(74) Representative: **Dr. E. Wiegand Dipl.-Ing. W. Niemann Dr. M. Kohler Dipl.-Ing. J. Glaeser Dr. H.-R. Kressin Patentanwälte Herzog-Wilhelm-Strasse 16 D-8000 München 2 (DE)**

Courier Press, Leamington Spa, England.

## Description

### Background of the Invention

This invention is concerned with the separation of discrete minerals which are bonded together mechanically rather than on a molecular basis. The invention is particularly but not necessarily exclusively concerned with the separation of pyrites, ash and other impurities from coal in the production of a fuel comprising coal particles, oil and water. A fuel of the kind with which the invention is concerned is described in my patent No. 3,941,552 issued March 2, 1976. In that patent the problems of contamination of the coal is discussed and it is proposed that there be incorporated into the fuel a quantity of lime to reduce objectionable emissions when the fuel is burned. The present invention is specifically directed to the removal, prior to combustion, of impurities contaminating the coal such as, for example, pyrites and ash forming constituents. The present invention additionally is concerned with the diminution of particle size prior to the incorporation of the particles into the fuel.

### Summary of the Present Invention

The present invention provides a method of producing fuel comprising mixing particles of coal and impurities bonded to said coal with water to form a slurry, exposing the slurry to a sufficiently intense vibrating action to produce cavitation within the slurry to mechanically detach the impurities from said coal and to produce size reduction of said particles, separating the detached impurities from the slurry, and reducing the water content of the slurry preparatory to the addition of oil to form a coal-oil-water fuel. The detached impurities which were separated from the remaining coal constituents of the particles may be used as a by-product, for example, in the production of aggregates. The cleaned coal, of appropriate, after adjusting the water content of the resultant mixture of water and coal, is then mixed with oil and the mixture of coal, oil and water is treated to form an emulsion. Most desirably the treatment of the coal, oil and water to produce an emulsion is that described in my aforementioned patent. The resultant fuel can than be burned to produce energy as described, for example, in my aforementioned patent or as described in US—A421 221.

The agitation of the slurry of coal and water is most desirably effected sonically and the slurry is exposed to a sonic energy density level of at least 3 watts per cm$^2$ but in any event sufficient energy density in combination with a suitable frequency to cause cavitation and related to the range of particle size being treated.

According to a further aspect of the present invention oil is added to the slurry of reduced water content and the resulting coal-oil-water mixture is subjected to violent agitation to produce cavitation.

### Description of the Drawings

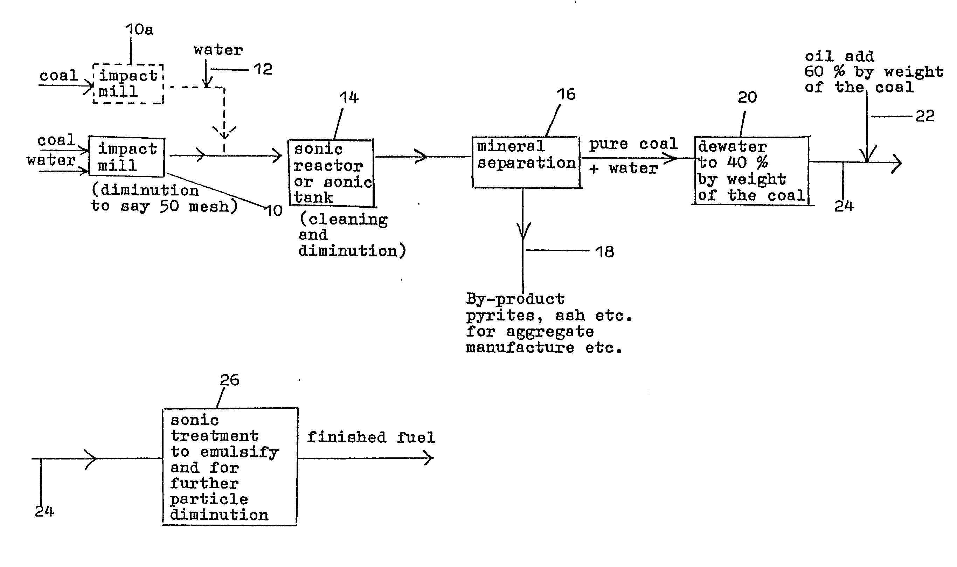

The single figure in the drawings is a flow chart showing the process part of the invention.

### Description of the Preferred Embodiment

In the process according to the invention, coal and water are delivered to an impact mill 10 or to some other appropriate grinding apparatus. Alternately, and as indicated in the chain line in the flow chart, coal may be delivered to an impact mill 10a and water is added to the coal particles exiting impact mill 10a as, for example, at 12 to form a slurry. The slurry exiting mill 10 or that produced by the addition of water to the particles exiting mill 10a, is delivered to a tank 14 within which the slurry is subject to violent agitation in this particular embodiment by irradiating the slurry with sonic energy. The sonic vibrations may be generated by known techniques, and particularly desirably the vibrations are generated by the utilization of equipment similar to that described in my aforementioned patent. Using a typical particle size of 50 to 100 μm the suitable vibrations have been found to have a frequency of between 500 and 50,000 Hz and amplitudes ranging from $2 \times 10^{-4}$ to 10″ ($508 \times 10^{-4}$ to 25,4 cm). The energy density should be of an order sufficient to produce effective cavitation with the volume of the slurry. It will be recognized that, dependent upon the density and other characteristics of the slurry particularly the physical characteristics of the coal particles, the energy requirements will vary.

The slurry is exposed to that radiation which will produce detachment of impurities bonded to the coal components of the particles and will simultaneously produce diminution of the particle size, e.g. corresponding to a sieve opening of 0.297 mm (50 mesh).

From the tank 14 the water and the coal and impurity components of the particles are delivered to a separation unit 16 in which the coal, pyrites and other impurities are separated. The denser impurities such as iron pyrites and silica are removed from the unit 16 as at 18 to be discarded or to be utilized in the manufacture of other products.

From unit 16 relatively pure coal and water is delivered to a dewatering unit 20 effective to reduce the quantity of the water in the slurry for further processing such as in my patent No. 3,941,552 or for feed stock, burning or other purposes.

When processed according to the teachings of my earlier patent oil is added at input 22 to the mixture being delivered along line 24 that oil being added in an amount equal to about 60% by weight of the coal. The resultant mixture of coal, oil and water is then delivered to a sonic treatment chamber 26 which conveniently is of the kind described in my aforementioned patent where the mixture is subject to violent agitation to produce cavitation and to produce a virtually stable emulsion.

It will be recognized that the particular form of the various components described hereabove may be varied to suit particular environments and in particular the mechanical mills, the dewatering and mineral separation units may take any of a number of forms since the particular forms of those items, per se, do not constitute a part of the present invention.

It will be recognized that in certain instances after the contaminants have been separated from the coal, the coal may be dried thoroughly and mixed with oil to form a dispersion of coal and oil which may be burned as a fuel.

### Claims

1. A method of producing fuel comprising mixing particles of coal and impurities bonded to said coal with water to form a slurry, exposing the slurry to a sufficiently intense vibrating action to produce cavitation within the slurry to mechanically detach the impurities from said coal and to produce size reduction of said particles, separating the detached impurities from the slurry, and reducing the water content of the slurry preparatory to the addition of oil to form a coal-oil-water fuel.

2. The method of producing fuel according to claim 1, wherein said vibrating action is produced by exposing said slurry to a sonic energy density level of at least 3 watts/cm$^2$.

3. The method of producing fuel according to claim 1, further comprising adding oil to the slurry of reduced water content and subjecting the resulting coal-oil-water mixture to violent agitation to produce cavitation.

4. The method of producing fuel according to claim 3, wherein the oil is added to the dewatered slurry in an amount equal to about 60 percent by weight of the coal content of the dewatered slurry.

5. The method of producing fuel according to claim 4, further comprising subjecting the resultant coal, oil and water mixture to violent agitation to produce cavitation to produce a stable emulsion.

### Patentansprüche

1. Verfahren zur Herstellung von Brennstoff, dadurch gekennzeichnet, daß Kohleteilchen und an diese Kohle gebundene Verunreinigungen unter Bildung einer Aufschlämmung mit Wasser vermischt werden, diese Aufschlämmung einem ausreichend intensiven Vibrationsvorgang unteworfen wird, um innerhalb der Aufschlämmung eine Hohlraumbildung zu erzeugen und die Verunreinigungen auf mechanischem Wege von der Kohle zu lösen sowie eine Reduzierung der Größe der Teilchen zu erzeugen, die von der Hohle getrennten Verunreinigungen aus der Aufschlämmung abgetrennt und der Wassergehalt der Aufschlämmung zur Vorbereitung der Zugabe von Öl für die Bildung eines Kohle-Öl-Wasser-Brennstoffs herabgesetzt werden.

2. Verfahren zur Herstellung von Brennstoff nach Anspruch 1, daurch gekennzeichnet, daß der Vibrationsvorgang durch Aussetzen der Aufschlämmung an eine Schalldichte von wenigstens 3 W/cm$^2$ hervorgerufen wird.

3. Verfahren zur Herstellung von Brennstoff nach Anspruch 1, dadurch gekennzeichnet, daß weiterhin zu der Aufschlämmung mit herabgesetztem Wassergehalt Öl zugegeben wird, und das sich ergebende Kohle-Öl-Wasser-Gemisch zur Bildung von Hohlräumen einer kräftigen Rüttelbewegung unterworfen wird.

4. Verfahren zur Herstellung von Brennstoff nach Anspruch 3, dadurch gekennzeichnet, daß zu der entwässerten Aufschlämmung Öl in einer Menge, die etwa 60 Gew.—% des Kohlegehaltes der entwässerten Aufschlämmung entspricht, zugegeben wird.

5. Verfahren zur Herstellung von Brennstoff nach Anspruch 4, dadurch gekennzeichnet, daß das sich ergebende Kohle-Öl-Wasser-Gemisch einer weiteren kräftigen Rüttelbewegung zur Bildung von Hohlräumen unterworfen wird, um eine stabile Emulsion herzustellen.

### Revendications

1. Procédé de production de combustible, consistant à mélanger des particules de charbon et d'impuretés liées audit charbon avec de l'eau afin de former une suspension, à exposer la suspension à une action vibrante suffisamment intense pour induire une cavitation au sein de la suspension afin de détacher mécaniquement les impuretés dudit charbon et effectuer une diminution de la dimension desdites particules, à séparer de la suspension les impuretés détachées, et à réduire la teneur en eau de la suspension en vue de l'addition d'huile pour former un combustible charbon-huile-eau.

2. Procédé de production de combustible selon la revendication 1, dans lequel ladite action vibrante est exercée en exposant ladite suspension à un degré de densité d'énergie sonore d'au moins 3 watts/cm$^2$.

3. Procédé de production de combustible selon la revendication 1, consistant de plus à ajouter de l'huile à la suspension à teneur en eau réduite et à soumettre le mélange charbon-huile-eau résultant à une agitation violente pour induire une cavitation.

4. Procédé de production de combustible selon la revendication 3, dans lequel l'huile est ajoutée à la suspension à teneur en eau réduite en une quantité égale à environ 60 pour cent du poids du charbon contenu dans la suspension à teneur en eau réduite.

5. Procédé de production de combustible selon la revendication 4, consistant de plus à soumettre le mélange de charbon, d'huile et d'eau résultant à une agitation violente pour induire une cavitation afin de former une émulsion stable.

0 050 672

- coal → [impact mill] (10a)
- water → 12
- coal, water → [impact mill] (10) (diminution to say 50 mesh)
- → [sonic reactor or sonic tank] (14) (cleaning and diminution)
- → [mineral separation] (16) → pure coal + water → [dewater to 40 % by weight of the coal] (20) → 24
- oil add 60 % by weight of the coal → 22
- 18 ↓ By-product pyrites, ash etc. for aggregate manufacture etc.
- 24 → [sonic treatment to emulsify and for further particle diminution] (26) → finished fuel